# DEMANDE DE BREVET EUROPEEN

(11) **EP 3 034 297 A1**
(43) Date de publication de la demande: **22.06.2016**
(21) Numéro de dépôt: 14199140.6
(22) Date de dépôt: 19.12.2014
(51) Int. Cl.: B32B 17/10, C03C 27/12, G02F 1/17

(54) **VITRAGE FEUILLETÉ**

(71) Demandeur: AGC Glass Europe, 1348 Louvain-la-Neuve (BE)
(72) Inventeur: Legrand, Denis, 59144 Wargnies (FR); Masaki, Yuji, 1950 Kraainem (BE)
(74) Mandataire: Chabou, Samia

(57) **Abrégé**

L'invention concerne un vitrage feuilleté (10) comprenant (i) une première feuille de verre (11), (ii) un film fonctionnel alimenté électriquement (12), (iii) un moyen pour réfléchir les rayonnements infrarouges (13) disposé entre la première feuille de verre (11) et le film fonctionnel (13), (iv)au moins un premier intercalaire thermoplastique (20) disposé entre le moyen pour réfléchir les rayonnements infrarouges (13) et le film fonctionnel (12), et (v) une seconde feuille de verre (16).

Selon l'invention, le vitrage feuilleté comprend au moins un intercalaire comprenant une zone opaque (21) aux rayonnement des longueurs d'ondes du visible.

## Description

La présente invention concerne un vitrage feuilleté, en particulier un vitrage feuilleté destiné à être utilisé en tant que vitrage pour l'automobile, par exemple en tant que toit, pare-brise, lunette arrière, vitre latérale d'un véhicule.

Cependant, même si l'invention est d'abord destinée à l'application aux vitrages automobile, elle concerne aussi les autres sortes de vitrages et de façon générale toutes les vitrages comprenant un film fonctionnel, en particulier lorsque ceux-ci présentent dans leur constitution ou dans leur mise en oeuvre, des contraintes notamment en matière de traitements thermiques. Par simplification, la suite de la description fait référence essentiellement aux vitrages automobile et en particulier aux toits vitrés pour automobile, étant entendu que ceci ne limite pas l'objet de l'invention.

Les toits vitrés se substituent pour une part croissante aux toits traditionnels qui sont partie de la carrosserie des véhicules. Le choix de ces toits est le fait des constructeurs d'offrir à leurs clients cette option donnant l'impression de l'ouverture du véhicule vers l'extérieur, à la manière d'un cabriolet, sans avoir les inconvénients de ces derniers, les toits maintenant le confort d'une berline traditionnelle. Pour cela, les toits vitrés doivent satisfaire à de nombreuses exigences.

Le choix de toits vitrés a notamment pour but le gain de luminosité dans l'habitacle. Ce gain ne doit pas être contraire à d'autres propriétés qui assurent le confort des passagers, en particulier le confort thermique et le confort acoustique. Ce dernier est conservé voire amélioré par la présence de la structure feuilletée, en particulier lorsque celle-ci comporte des intercalaires choisis pour leur capacité d'amortissement des vibrations, sur le modèle de ce qui est mis en oeuvre notamment pour les vitrages des pare-brise.

La présence de toits vitrés, motivée par l'augmentation de la luminosité, conduit à l'accroissement des transferts thermiques avec l'extérieur. Ceci est sensible dans le mécanisme d'effet de serre lorsque le véhicule est exposé à un rayonnement solaire intense, mais aussi dans les pertes thermiques de l'habitacle en période froide.

Le contrôle des conditions thermiques conduit à diverses mesures dont l'utilisation de vitrages à forte sélectivité. Ces conditions résultent du choix des verres utilisés (le plus souvent minéraux, mais qui peuvent aussi être organiques). Elles sont aussi le fait des filtres additionnels que comportent ces vitrages, notamment ceux constitués par des systèmes de couches réfléchissant sélectivement les infrarouges. L'art antérieur fait état de solutions répondant à ces exigences. C'est le cas en particulier du brevet EP1200256.

Par ailleurs, le souhait d'un accroissement de luminosité dans l'habitacle n'est pas nécessairement permanent. L'utilisateur peut, selon le moment, préférer une luminosité moindre, ou simplement maintenir le caractère «privatif».

Pour modifier la transmission lumineuse des vitrages en fonction des conditions d'utilisation, des solutions ont été proposées antérieurement. Il s'agit notamment des vitrages dits «électro-commandés», tels que les vitrages comportant des films fonctionnels tels que des moyens électro-chromes dans lesquels la variation est obtenue par modification de l'état d'ions colorés dans des compositions incluses dans ces vitrages. Il s'agit aussi de vitrages comprenant des couches de particules en suspension, qui selon l'application d'une tension électrique sont ordonnées ou non tels que les systèmes dits SPD (pour «suspended particles devices») ou encore un film de type cristaux liquide (LC), constitués d'un polymère contenant les cristaux liquides sensibles à l'application de la tension électrique.

En particulier, ces films fonctionnels s'ils permettent une modification de l'intensité de la luminosité dans l'habitacle, ils ont pour fonction, de modifier le caractère privatif et l'effet anti-éblouissement. En particulier, ces films fonctionnels sont des films commutables entre un état sombre et un état translucide voire transparent ou encore qui est capable de fournir une fonction d'éclairage à l'intérieur d'un véhicule dans lequel le vitrage est monté.

Dans la littérature antérieure, l'utilisation de films à cristaux liquides dans des vitrages a été envisagée pour la constitution de parois d'isolement visuel commandé. Dans ces applications, la fonction principale est la transformation d'un vitrage essentiellement transparent en un vitrage simplement translucide. Ces applications n'impliquaient pas de caractéristiques thermiques spécifiques. De même, la transmission lumineuse n'était pas déterminante.

Il est connu aussi dans la littérature, des exemples de vitrages comprenant un film SPDs. De tels vitrages sont par exemple décrits dans les documents WO2005/102688 et DE 100 43 141. Le film est commutable entre un état sombre (en l'absence de tension appliquée) et un état très transparent (lorsqu'une tension est appliquée).

De manière générale, que ce soit un film fonctionnel de type SPD ou de cristaux liquides (LC) ou un film comprenant des diodes électroluminescentes, celui-ci est laminé dans une structure de vitrage laminé grâce à au moins un intercalaire thermoplastique. Cette mise en oeuvre est par exemple décrite dans le document US2004/0257649.

De tels vitrages feuilletés ayant des propriétés variables de transmission de la lumière due à l'inclusion d'un film de cristaux liquides (LC) ou un film SPD sont de plus en plus recherchés en raison de l'amélioration du confort du passager. En effet, une fois monté dans un véhicule, ce vitrage muni d'un tel film permet de diminuer la chaleur dans l'habitacle du véhicule, mais permet également d'adapter la luminosité souhaitée à l'intérieur du véhicule.

Malheureusement, ces films fonctionnels, lorsqu'ils sont intégrés dans un vitrage feuilleté s'altèrent du fait de leur sensibilité aux températures élevées dans une mesure telle que la performance de chacun est affectée.

De manière générale dans la préparation des toits selon l'invention, il convient de considérer l'aptitude des éléments constitutifs à supporter les traitements qui conduisent à la mise en forme et à l'assemblage du vitrage. En pratique, les films SPDs ou encore de cristaux liquides (PDLC) sont sensibles à l'élévation de température. Au-delà de 70°C, ils ne sont en général plus commandés par les variations de champs électriques. Cette modification est cependant réversible de sorte que les traitements thermiques auxquels leur assemblage dans le feuilleté les conduit, ne les altèrent pas. Le traitement en question est le plus souvent celui de passage à l'étuve à 130°C environ. Cependant, parfois la température de laminage peut provoquer une dégradation permanente de la performance optique du film fonctionnel tel qu'un film PDLC, SPD, ... et lorsqu'il est soumis à une exposition prolongée à la chaleur, notamment à des températures supérieures à 70°C, et plus particulièrement supérieure à 80°C, la zone située au bord du film fonctionnel (PDLC, SPD, ...) peut être endommagée et conduire à une altération du film et notamment de la fonction de commutation par exemple.

Une exposition à de telles températures prolongée résulte notamment de l'application d'un champ électrique pour activer le film et/ou de la chaleur conduite à travers les feuilles de verre et la couche d'émail, ou encore du rayonnement solaire.

Ainsi, le film fonctionnel lorsqu'il est intégré dans un vitrage feuilleté et positionné sur un véhicule, notamment en tant que toit vitré, celui-ci doit avantageusement résister à des températures élevées pouvant atteindre des températures supérieures à 85°C. Au-delà de cette température, et pour une exposition prolongée, le film fonctionnel s'altère. Cette température est notamment atteinte lorsque le film fonctionnel est en position active (position ON). Ainsi, le film fonctionnel lorsqu'il est intégré dans un vitrage multiple doit être protégé des élévations de températures.

Par simplification, la numérotation des feuilles de verre dans la suite de la description fait référence à la nomenclature de numérotation classiquement utilisée pour les vitrages. Ainsi, la face du feuilleté qui est au contact avec l'environnement extérieur au véhicule est connue comme étant la face 1 et la surface en contact avec le milieu interne, c'est-à-dire l'habitacle du véhicule, est appelée face 4, le film fonctionnel étant positionné entre les faces 2 et 3, où il peut être protégé contre les dommages.

Pour éviter tout doute, les termes "externe" et "interne" se réfèrent à l'orientation du vitrage lors de l'installation en tant que vitrage dans un véhicule.

Classiquement, les vitrages feuilletés pour automobile sont imprimés sur toute la périphérie des bords du vitrage en face 2, pour former une bande d'occultation, afin d'une part protéger du rayonnement UV, la colle permettant d'adhérer tous les busbars et les connecteurs électriques entre le film fonctionnel et le faisceau de câblage du véhicule, et d'autre part de masquer ces éléments.

Le but de la bande est double, d'une part l'esthétique, car de l'extérieur tous ces éléments ne sont pas visibles de l'extérieur, et d'autre part, pour éviter les dommages de la colle ou d'autres composants de l'exposition aux UV. La bande d'occultation peut également servir à masquer les bords du film fonctionnel.

Généralement, l'impression utilisée est la sérigraphie de l'émail. En effet, l'émail permet de procurer les qualités optiques requises et un masquage suffisant des éléments tels que ceux cités ci-dessus.

Cependant, la sérigraphie sur feuilles de verre n'est pas sans inconvénient. Dans un feuilleté, l'émail est sérigraphié en face intérieure de la feuille de verre destinée à la position extérieure, c'est-à-dire en contact avec l'atmosphère, appelée face 2, et/ou en face extérieure de la feuille de verre destinée à la position intérieure, appelée face 4, qui est en contact avec l'atmosphère intérieure, notamment de l'habitacle d'un véhicule.

Un des inconvénients de l'émaillage en face intérieure 2, dans la structure du vitrage feuilleté est que l'émail absorbe les rayons infrarouges entrainant une augmentation de la température du vitrage feuilleté et donc par voie de conséquence une dégradation du film fonctionnel qui est sensible à des températures élevées. De plus, l'émail n'absorbe pas la même quantité de chaleur que le verre. Le chauffage doit être ainsi modifié pour chaque configuration de vitrage feuilleté, tels que les toits vitrés, de pare-brise, avec et sans détecteur de pluie, de luminosité...

Ainsi, l'invention consiste à substituer la sérigraphie usuellement utilisée sur au moins la face 2 pour masquer généralement le bord des vitrages par un film intercalaire thermoplastique comprenant une zone opaque aux rayonnements des longueurs d'ondes du visible.

Il est entendu que l'intercalaire thermoplastique opaque aux rayonnements des longueurs d'ondes du visible peut être également positionné sur la face 4 ou tout autre position.

On entend par zone opaque aux rayonnements des longueurs d'ondes du visible, une zone dont la transmission lumineuse est inférieure à 5% et de préférence égale à 0% de la lumière incidente. Cette zone opaque, contrairement à l'émail, permet à la fois de masquer des éléments comme connectiques (busbars...), la colle... comme le ferait l'émail mais surtout empêche l'absorption des rayonnements infrarouges et donc permettre de protéger le film fonctionnel de la chaleur (ie des températures élevées).

Par souci de simplification, dans le reste de la description, le terme « la zone opaque » fera référence à la zone opaque aux rayonnements des longueurs d'ondes du visible.

Bien évidement cette modification de procédé n'affecte pas les spécifications du produit final: respect des normes et spécifications clients, non seulement d'un point de vue résistance mécanique, vieillissement mais également esthétique.

L'invention a donc pour but la mise à disposition d'un moyen pour protéger un film fonctionnel contre la chaleur, lorsque celui-ci est intégré dans un vitrage feuilleté, tout en permettant de masquer des éléments tels que les busbars, les connectiques... comme le fait l'email classiquement utilisé dans les verres automobiles.

Ce but est atteint par l'invention qui a pour objet un vitrage feuilleté comprenant :
a. une première feuille de verre,
b. un film fonctionnel alimenté électriquement,
c. un moyen pour réfléchir les rayonnements infrarouges disposé entre la première feuille de verre et le film fonctionnel alimenté électriquement,
d. au moins un premier intercalaire thermoplastique disposé entre le moyen pour réfléchir les rayonnements infrarouges et le film fonctionnel,
e. une seconde feuille de verre.

Selon l'invention, le vitrage feuilleté comprend au moins un premier intercalaire comprenant une zone opaque aux rayonnement des longueurs d'ondes du visible.

Selon un mode de réalisation préféré de l'invention, ladite zone opaque s'étend sur la toute la périphérie de la feuille de verre sur laquelle elle est appliquée, tout comme la couche d'émail. Cette zone opaque se substitut ainsi à l'émail classiquement utilisé.

Selon un mode de réalisation particulier de l'invention, la zone opaque peut s'étendre sur une large portion du vitrage feuilleté.

Selon un mode de réalisation préféré de l'invention, ladite zone opaque s'étend sur la toute la périphérie de la face interne de la feuille de verre externe c'est-à-dire en face 2.

Grâce à l'invention, le film fonctionnel compris entre au moins deux feuilles de verre est protégé contre la chaleur provenant notamment de l'absorption des infra-rouges par les feuilles de verre qui lors de l'étape de chauffage lors du processus de lamination et/ou de l'application d'un champ électrique pour activer le film et/ou de la chaleur conduite à travers les feuilles de verre ou encore de rayonnement solaire. Les films fonctionnels tels que les PDLCs et SPDs , sont sensibles à la fois à la température et l'humidité, ainsi les performances de ces films peuvent être affectés. Par exemple, la durée de vie du film fonctionnel peut être significativement réduite s'il est soumis à des températures élevées et ce durant un temps prolongé.

Selon un mode de réalisation préférée de l'invention, le film fonctionnel est altérable à une température élevée. Par exemple, un tel film comprend des cristaux liquides dispersés dans un polymère (PDLC) ou encore des particules dispersées en suspension dans un polymère (SPD). Grâce à l'invention, la durée de la demi-vie du dispositif électroluminescent peut être augmentée.

On entend par température élevée des températures supérieure à 60°C et de manière préférée des températures supérieures à 80°C. Le film fonctionnel soumis de manière prolongée à de telles températures, s'altère. Il est donc nécessaire de réduire fortement, voire éliminer l'absorption des infrarouges par la feuille de verre qui sera placée du côté extérieur du véhicule car les infrarouges sont alors conduits vers le film fonctionnel.

De manière générale, le film fonctionnel n'est pas suffisamment protégé des rayonnements infrarouges aux bords du vitrage feuilleté dans lequel il est intégré car habituellement une couche d'émail est présente pour masquer les bords mais cette couche d'émail est présente dans le vitrage feuilleté avant la couche réfléchissant les rayonnements infrarouges. Ainsi, le bord du vitrage peut atteindre des températures supérieures à 100°C qui à terme endommagent le film fonctionnel.

Grâce à l'invention, les températures mesurées aux bords du vitrage, au niveau de la zone opaque, sont inférieures à 100°C et de manière préférée inférieures à 90°C et de manière encore plus préférée inférieures à 85°C. Ainsi, le film fonctionnel n'est plus soumis à des températures élevées qui à terme conduisent à une dégradation du film fonctionnel.

Selon un mode de réalisation préféré de l'invention, l'intercalaire thermoplastique comprenant une zone opaque est formé à partir d'un cadre opaque disposé autour de la zone non opaque.

Selon un mode de réalisation particulier de l'invention, un intercalaire thermoplastique opaque dans son intégralité et de dimension permettant la lamination des feuilles de verre entre elles, peut être évidé de sa partie centrale pour former un cadre. La partie centrale est alors remplacée par un intercalaire thermoplastique non opaque ou transparent. Ces deux pièces lors du processus de lamination vont fusionner de manière à former une pièce unique. Avantageusement, le cadre est formé de bandes d'intercalaire opaque, par exemple un PVB ou un EVA teinté en noir dans la masse juxtaposée, les bandes étant disposées autour d'une pièce centrale d'un intercalaire thermoplastique, les pièces vont fusionnées ensemble de manière à former l'intercalaire thermoplastique qui s'étendra sur toute la périphérie des feuilles de verre.

Ainsi, l'intercalaire thermoplastique selon l'invention, comprend une zone opaque permettant de protéger le film fonctionnel des rayonnements infrarouges, cette zone opaque entourant une zone opaque.

Le au moins un intercalaire thermoplastique peut être de n'importe quel matériau connu dans la technique apte à former un stratifié. Il peut s'agir d'un copolymère éthylène-acétate de vinyle, polyuréthane, polycarbonate, polyvinyle butyral, le chlorure de polyvinyle ou un copolymère d'éthylène et d'acide méthacrylique. Selon un mode de réalisation préféré de l'invention, l'intercalaire thermoplastique comprenant une zone opaque aux rayonnements des longueurs du visible est une feuille de polyvinyle de butyral (PVB) ou d'éthylène-acétate de vinyl (EVA).

Il est généralement disponible dans une épaisseur comprise entre 0,38 et 1,1 mm, mais le plus souvent de 0,76 mm.

Selon un mode de réalisation préféré de l'invention, l'intercalaire thermoplastique comprenant une zone opaque est obtenu par coloration en masse de la périphérie de l'intercalaire.

Selon un mode de réalisation préféré de l'invention, l'intercalaire thermoplastique comprenant une zone opaque est obtenu par juxtaposition d'un cadre d'intercalaire thermoplastique coloré opaque et d'une partie centrale formée d'un intercalaire transparent, le cadre opaque et la partie centrale de l'intercalaire thermoplastique pouvant être dans un matériau thermoplastique identique ou différent, l'un étant coloré et l'autre non.

Selon une mise en oeuvre particulière de l'invention, les dimensions de la zone opaque sont similaires à celle usuellement utilisées pour une couche d'émail. Il est entendu qu'elles peuvent être supérieures ou inférieures à celles de la couche d'émail, le but étant que la zone opaque soit suffisamment large pour masquer les éléments collés au vitrage tels que les busbars, connectiques....

Selon une mise en oeuvre particulière de l'invention, l'intercalaire thermoplastique comprenant une zone opaque aux rayonnements des longueurs du visible, , selon l'invention est disposé substantiellement sur la surface du vitrage.

L'insertion du film fonctionnel dans le vitrage feuilleté est de préférence facilitée par la mise en place d'un logement aménagé dans au moins un intercalaire. Ainsi, avantageusement, le vitrage feuilleté comprend en outre un second intercalaire thermoplastique encadrant le film fonctionnel. De manière préférée, le second intercalaire thermoplastique est de préférence une feuille de polyvinyle de butyral (PVB). Le film fonctionnel est alors de taille inférieure à celle des feuilles de verre entre lesquelles le film sera laminé. Le film fonctionnel est alors placé dans une région prédécoupée du second intercalaire thermoplastique de manière à favoriser sa lamination entre les deux feuilles de verre et éviter la formation de bulles dans le vitrage feuilleté.

Selon une mise en oeuvre particulière de l'invention, les première et seconde feuilles de verre sont laminées grâce à au moins trois intercalaires thermoplastiques. Dans cette configuration particulière, le premier intercalaire thermoplastique est l'intercalaire thermoplastique comprenant une zone opaque, et disposé sur la face 2 du vitrage feuilleté selon l'invention, le deuxième intercalaire est un intercalaire thermoplastique encadrant le film fonctionnel et le troisième intercalaire thermoplastique est disposé sur la face 3 du vitrage feuilleté selon l'invention. Dans cette mise en oeuvre particulière de l'invention, au moins un des trois intercalaires thermoplastique est choisi parmi un copolymère de polyvinyle de butyral ou d'éthylène-acétate de vinyle, ou de polyuréthane, ou de polycarbonate.

De manière avantageuse, des intercalaires thermoplastiques supplémentaires peuvent être disposés entre le film fonctionnel et les feuilles de verre.

Une telle conception utilisant au moins trois intercalaires thermoplastiques dont un encadrant le film fonctionnel, peut être particulièrement avantageuse pour stratifier un film fonctionnel alimenté électriquement, dont l'épaisseur est supérieure à une cinquantaine de microns.

Avantageusement, des intercalaires thermoplastiques supplémentaires sont positionnés entre le film fonctionnel et la seconde feuille de verre.

La commande du film fonctionnel peut comprendre de simples interrupteurs ou encore des capteurs placés entre le film fonctionnel et la seconde feuille de verre ou sur la face 4 du vitrage feuilleté. Si l'on souhaite disposer un interrupteur sur le toit vitré lui-même, il est souhaitable qu'il ne fasse pas obstacle à la transparence à l'origine du choix des toits vitrés.

L'invention propose d'utiliser des moyens de commande du film fonctionnel qui soient également essentiellement transparents. A cet effet l'invention propose d'utiliser des interrupteurs dont la mise en oeuvre est déclenchée par l'intermédiaire de relais actionnés par une impulsion liée à une grandeur électrique. De préférence l'interrupteur utilisé est du type capacitif. Ce mode est celui qui permet d'utiliser au mieux la structure même des éléments inclus dans le toit. A titre indicatif, un capteur capacitif peut être de type à contact direct. L'élément sensible est par exemple une zone délimitée dans une couche low-e située sur la face tournée vers l'habitacle. Les couches low-e étant conductrices peuvent servir de capteur pour la commande du relais d'interruption. L'avantage du contact direct est que la modification de capacité induite par contact peut être relativement importante de sorte que le seuil commandant l'interrupteur peut être suffisamment élevé pour écarter tout déclenchement parasite.

Selon l'invention, le moyen pour réfléchir les rayonnements infrarouges prévus dans le vitrage feuilleté est de préférence une couche réfléchissant les infrarouges. Ainsi, pour rester dans des conditions de transmission énergétique adéquates, les vitrages selon l'invention comprend des couches minces réfléchissant les infrarouges. De telles couches sont notamment celles comportant une ou plusieurs couches minces métalliques, notamment à base d'argent, associées à des couches minces diélectriques qui contribuent notamment à la sélectivité du filtre. Ces ensembles de couches sont disposés soit sur une feuille support, notamment de PET, insérée dans le feuilleté, soit pas application directe sur la feuille de verre. Dans les deux cas, ce moyen pour réfléchir les infrarouges est situé dans le feuilleté au-dessus du film fonctionnel, améliorant la protection de ce film.

De telles couches réfléchissant les infrarouges sont utilisées dans de nombreuses applications dans les vitrages antisolaires ou dans les vitrages bas-émissifs. Ils sont généralement constitués de couches minces d'oxydes conducteurs, ou mieux, car beaucoup plus performants de couches métalliques suffisamment minces pour être pratiquement transparentes. Dans ces moyens pour réfléchir les infrarouges sont associées à des couches diélectriques également minces et transparentes qui donnent à l'ensemble la sélectivité nécessaire. Le plus souvent pour améliorer cette sélectivité, qui s'accompagne de réflexion que l'on s'efforce de rendre aussi neutre que possible, les filtres comportent une pluralité de couches métalliques lesquelles sont le plus souvent à base d'argent.

Ces couches métalliques peuvent être appliquées par des techniques de pulvérisation cathodique, techniques opérées sur des feuilles planes. Par suite, cette solution implique que ces couches subissent les traitements thermiques lors de la mise en forme de cette feuille de verre.

Le choix du système de couches est avantageusement celui de systèmes à plusieurs couches d'argent pour obtenir un moyen pour réfléchir les infrarouges efficace et qui permette le contrôle de la coloration notamment en réflexion. Un ensemble de couches particulièrement efficace est tel que décrit dans la demande WO2011/147875. Dans cette demande le système préconisé comporte trois couches d'argent et des couches diélectriques, l'ensemble étant choisi, notamment les épaisseurs des couches d'argent, de telle sorte que la coloration en réflexion soit satisfaisante même sous de faibles incidences d'observation.

Selon l'invention, le moyen pour réfléchir les rayonnements infrarouges est prévu sur la face 2 du vitrage feuilleté entre la feuille de verre externe et le film fonctionnel, c'est-à-dire la face interne de la première feuille de verre. En outre, il peut être également prévu sur une des faces de la seconde feuille de verre comprise dans le vitrage laminé.

En général, les une ou plusieurs couches à partir de laquelle le film réfléchissant l'infrarouge est formé sont de l'ordre de quelques dizaines de nanomètres d'épaisseur.

Afin d'éviter les risques de corrosion de la couche réfléchissant les infrarouges, la couche ne s'étend pas jusqu'aux extrémités de la feuille de verre, la zone séparant le bord du vitrage du début de la couche réfléchissant les infrarouges est communément appelée « Edge delition ».

Selon un mode de réalisation préféré de l'invention, le film fonctionnel est placé à une certaine distance du bord du vitrage feuillé et en particulier de la zone dite « Edge delition ». Cette distance minimale, qui est fonction de la longueur de la zone « edge delition » permet de dissiper les calories et donc de protéger le film fonctionnel.

Comme alternative aux couches métalliques sur la base décrite ci-dessus, la couche réfléchissant les infrarouges peut comprendre une pluralité de couches non métalliques, de telle sorte qu'il fonctionne comme un filtre passe-bande (la bande étant centré sur la région du proche infrarouge du spectre électromagnétique).

Ainsi, lors de l'utilisation en tant que vitrage pour automobile, le vitrage feuilleté selon l'invention peut être décrit comme comprenant une feuille de verre externe et une feuille de verre interne, un moyen pour réfléchir les infrarouges prévu entre la feuille de verre externe du vitrage feuilleté et le film fonctionnel, ce qui réduit la quantité de rayonnement infrarouge qui pourrait être autrement incident sur le film fonctionnel et donc le détériorer.

Dans les vitrages feuilletés de l'art antérieur comprenant un film fonctionnel et un moyen pour réfléchir les infrarouges et en particulier lorsque ce moyen est une couche métallique, celle-ci est appliquée sur la face 2 après la couche d'émail. Dans ce mode de réalisation de l'art antérieur, la quantité d'infrarouges qui peut être conduite vers le film fonctionnel est plus importante en comparaison avec l'invention. La couche réfléchissant les infrarouges est selon l'invention en contact direct avec la feuille de verre et est prévue avant l'intercalaire comprenant une zone opaque. Ainsi, selon l'invention, la couche réfléchissant les infrarouges joue pleinement et de manière uniforme son rôle. La quantité d'infrarouge pénétrant notamment aux bords du vitrage et par voie de conséquence transmise par conduction au film fonctionnel, qui sont masqués par la zone opaque de l'intercalaire thermoplastique est ainsi diminuée. Ainsi, les caractéristiques opto-énergétiques dans la zone opaque aux bords du vitrage vu de l'extérieur du véhicule sont améliorées. En particulier, grâce à l'invention, la réflexion énergétique est inférieure à 60%, de manière préférée inférieure à 55%, et de manière encore plus préférée inférieure à 50%. La réflexion dans les infrarouges est supérieure à 70%, de manière préférée supérieure à 80% et de manière encore plus préférée supérieure à 85%. La transmission lumineuse dans cette zone opaque est de préférence inférieure à 5% et de manière préférée de 0%. Ces propriétés permettent de garantir une bonne esthétique de l'extérieur du véhicule (cache connectiques, ...) et dans le même temps éviter une surchauffe du toit due au rayonnements solaires dans cette zone.

Par ailleurs, les composants des films fonctionnels peuvent être dégradés par une exposition excessive aux UV. Le choix des intercalaires permet de limiter de façon considérable cette exposition. C'est le cas en particulier de l'utilisation d'intercalaires de PVB, qui par nature font écran aux UV ne laissant passer qu'une très faible proportion de ceux-ci. Pour les films PVB de 0,38mm d'épaisseur plus de 95% des UV sont supprimés. Cette proportion peut dépasser 99%. Des polymères à base d'éthylène vinyl-acétate (EVA) sont aussi proposés qui renferment des composants leur conférant une très faible transmission des UV.

De manière avantageuse, le au moins un intercalaire thermoplastique et en particulier la zone non opaque est un intercalaire thermoplastique qui fait écran aux UV encore appelé « UV-cut ».

La présence d'un toit vitré modifie les conditions de confort thermique pour les occupants du véhicule. Si l'échauffement lorsque le véhicule est exposé au soleil conduit aux conditions indiquées ci-dessus, pour les passagers la présence de toits vitrés peut aussi conduire à ce qui est qualifié de sensation «d'épaule froide» lorsque la température extérieure est inférieure aux températures ambiantes de confort. Cette sensation est causée par une déperdition de chaleur depuis l'habitacle, par l'émission d'infrarouges lointains.

Afin de minimiser la déperdition de chaleur, des couches low-e (couche basse-émissive) sont prévues sur la face du vitrage tournée vers l'habitacle. Dans la désignation traditionnelle des faces des vitrages feuilletés il s'agit de la position 4. Les couches en question font office de filtre réfléchissant sélectivement les rayons infrarouge lointains émis depuis l'habitacle, sans constituer un obstacle important à la transmission des rayons du domaine visible de l'extérieur vers l'intérieur.

La présence de couches minces en position 4 est choisie en dépit du fait que dans cette position les couches ne sont pas protégées contre des altérations notamment mécaniques. Il est possible de choisir des couches low-e qui offrent une résistance mécanique et chimique suffisante.

Avantageusement, compte tenu de l'importance de disposer de revêtements de bonne résistance mécanique, on choisit des couches dites «dures», telles que celles produites par des techniques de type pyrolytique, CVD ou PECVD. Mais des systèmes low-e peuvent aussi être préparés par les techniques de pulvérisation cathodique sous vide, à condition que ces systèmes soient protégés par des couches suffisamment résistantes.

Selon l'invention il est préféré d'utiliser un système de couches basse-émissives, dont l'émissivité est inférieure à 0,3 et de préférence inférieure à 0,2, et de façon particulièrement préférée inférieure à 0,1.

Les systèmes "low-e" (bas-émissifs) pyrolytiques les plus usuels comportent une couche d'oxyde d'étain dopé déposée sur une première couche ayant pour rôle de neutraliser la couleur en réflexion. La couche au contact du verre est ordinairement une couche de silice ou d'oxy-carbure de silicium, éventuellement modifiée par des additifs. Les couches d'oxyde d'étain comparées aux couches des systèmes déposés par pulvérisation cathodique, sont relativement épaisses, plus de 200nm, et pour certaines plus de 450nm. Ces couches épaisses sont suffisamment résistantes pour supporter d'être exposées à des épreuves mécaniques et/ou chimiques.

Le film fonctionnel selon l'invention est alimenté électriquement. Son raccordement au système général d'alimentation électrique du véhicule se fait nécessairement à partir des bords du vitrage. Les conduites électriques de connexion ne sont normalement pas transparentes. Pour ne pas rompre la transparence même limitée du vitrage, on s'efforce de dissimuler ces conduites dans les zones périphériques du vitrage, lesquelles comportent selon une mise en oeuvre de l'invention, une zone opaque formée par un intercalaire thermoplastique destinée, notamment à masquer les marques irrégulières de collage du vitrage sur la carrosserie et protéger le film fonctionnel contre la chaleur.

En outre, l'intercalaire thermoplastique comprenant une zone opaque peut avoir des propriétés de réflexion des infrarouges et / ou des propriétés d'isolation acoustique (communément connu sous le nom d'un matériau «intercalaire acoustique").

Selon un mode de réalisation préféré de l'invention, le film fonctionnel permet de faire varier la transmission lumineuse du vitrage intégrant le film.

Le choix des films LC (ou PDLC) dans des toits feuilletés permet de satisfaire au besoin du caractère privatif et à l'absence d'éblouissement.

Lorsque le film LC est soumis au champ électrique dans le mode actif, le taux de diffusion, de façon connue, est modulable en fonction du champ électrique appliqué. L'orientation des cristaux est directement dépendante de ce champ. L'accroissement du champ reste limité à ce que les films peuvent supporter sans risque de claquage, correspondant à un court-circuit entre les électrodes qui recouvrent le matériau fonctionnel constitué essentiellement de polymère contenant les cristaux liquides. La tension supportable peut dépendre en partie de l'épaisseur du film. Pour les raisons indiquées précédemment cette épaisseur est limitée. Dans ces conditions la tension supportable pour les films usuels est de l'ordre de 220v.

Pour la constitution des toits il est préférable de limiter la lumière pénétrant dans l'habitacle. Celle-ci peut être relativement faible sans contrarier les souhaits des utilisateurs. Le choix cette limitation du flux lumineux, transmis ou diffusé, tient aussi au fait qu'il conduit à la limitation de la pénétration de la chaleur. Si les rayons infrarouges sont un vecteur important de l'énergie pénétrant dans l'habitacle, une autre part très importante accompagne le rayonnement du domaine visible. Il est donc nécessaire pour maîtriser le flux énergétique de réduire sensiblement la part du rayonnement visible franchissant le vitrage.

Avantageusement les vitrages selon l'invention sont composés de telle sorte que la lumière pénétrant par transmission et diffusion à l'état activé du film LC ne soit pas supérieure à 50% de la lumière incidente et de préférence inférieure à 40% voire même 30%. Cette proportion peut être beaucoup plus réduite. Néanmoins les vitrages selon l'invention présentent avantageusement un taux global de transmission et diffusion à l'état activé du film LC, qui n'est pas inférieur à 5% et de préférence pas inférieur à 10%.

La présence du film LC permet de moduler l'ensemble transmission diffusion selon l'état activé ou non du champ électrique. Dans le cas des vitrages comportant un film LC, le plus important est le fait que l'on passe d'un ensemble entièrement diffusant, et donc essentiellement translucide, à un état dans lequel la lumière transmise ne comporte qu'une faible fraction de diffusion comme indiqué ci-dessus. Néanmoins le passage d'un état à l'autre s'accompagne aussi d'une variation du flux lumineux entrant dans l'habitacle. En fonction de ce changement d'état, et en tenant compte de l'ensemble des absorptions aménagées comme indiqué ci-dessus, le rapport de lumière pénétrant à l'état activé à l'état non-activé est avantageusement d'au moins 1,5 et de préférence d'au moins 2. Ce rapport se retrouve pratiquement aussi dans celui des transmissions énergétiques.

Pour atteindre les transmissions lumineuses indiquées précédemment au moins une des feuilles de verre utilisées dans le vitrage est colorée. Avantageusement comme indiquée plus loin à propos des exemples les deux feuilles de verre sont colorées. Le vitrage peut aussi inclure des intercalaires colorés qui contribuent à l'établissement des conditions optiques recherchées. Avantageusement une feuille colorée est choisie de sorte que sous une épaisseur de 4mm sa transmission ne soit pas supérieure à 50%.

Ainsi, des intercalaires thermoplastiques colorés peuvent être superposé de manière à obtenir une couleur particulière ou des conditions optiques particulières.

La présence de feuilles colorées dans les vitrages comportant un film LC contribue aussi à restituer des couleurs qui soient satisfaisantes. Le plus souvent, les films LC tendent à présenter une coloration légèrement jaune en particulier en réflexion. Il est souhaitable, pour éviter cette apparence perçue par les passagers du véhicule, de faire en sorte que la feuille de verre, et/ou un intercalaire disposé entre le film LC et cette feuille de verre tournée vers l'habitacle soit colorée de façon à masquer cette nuance jaune. Le plus souvent l'on choisit une feuille de verre et/ou un intercalaire de coloration neutre, de préférence gris ou gris bleuté.

Un SPD peut également être choisi de manière à satisfaire le besoin du caractère privatif et à l'absence d'éblouissement. Un SPD est un film comprenant une pluralité de particules en suspension dans un milieu liquide de suspension, qui sont détenus dans un milieu polymère.

Le film est commutable entre un état sombre (en l'absence de tension est appliquée), et un état très transparent (lorsqu'une tension est appliquée).

Le degré d'alignement relatif entre les particules est déterminée par la tension alternative appliquée, de telle sorte qu'un dispositif à base de SPDs présente une transmission optique variable lorsqu'une tension variable est appliquée.

Le film SPD dans une structure de vitrage feuilleté, peut représenter la totalité ou une partie d'une couche intermédiaire entre les deux feuilles de verre.

Selon un mode de réalisation particulier de l'invention, le film fonctionnel selon l'invention peut comprendre des diodes électroluminescentes. Il existe de nombreuses diodes électroluminescentes connues dans l'état de l'art qui peuvent être utilisées conformément à la présente invention.

L'invention a d'autre part pour objet un procédé pour fabriquer un vitrage feuilleté tel que décrit précédemment.

Les avantages de ce procédé sont les mêmes que ceux des dispositifs, ils ne sont pas détaillés plus amplement.

L'invention concerne également l'utilisation d'au moins un intercalaire thermoplastique comprenant une zone opaque aux rayonnement des longueurs d'onde du visible, pour protéger de la chaleur un film fonctionnel altérable à des températures élevées, ledit film étant compris entre au moins deux feuille de verre.

Pour une meilleure compréhension, la présente invention va maintenant être décrite plus en détail à titre d'exemple non limitatif, en référence aux figures suivantes dans lesquelles:
La ***figure 1*** montre une vue en plan schématique d'un vitrage 10 connu de l'art antérieur comprenant un film PDLC stratifié entre 2 feuilles de verre.
La ***figure 2*** montre une vue en plan schématique d'un intercalaire thermoplastique 20 comprenant une zone opaque 21 aux rayonnement des longueurs d'ondes du visible. Ladite zone opaque encadrant une zone non opaque 22.
La ***figure 3*** montre une vue en plan schématique d'un vitrage 10 selon l'invention comprenant un film PDLC stratifié entre 2 feuilles de verre et un intercalaire thermoplastique comprenant une zone opaque aux zones opaques aux rayonnements des longueurs d'ondes du visible.

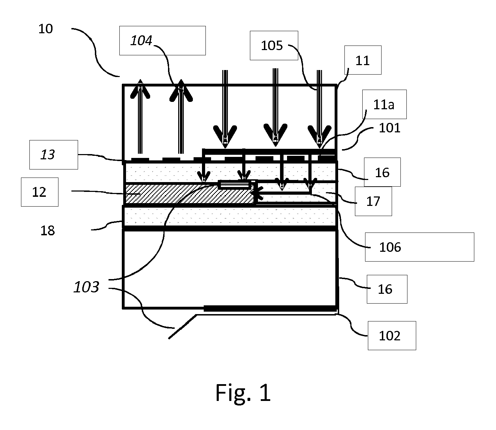

La ***figure 1*** montre un vitrage feuilleté connu de l'art antérieur, sous la forme d'un toit vitré pour automobile 10, comprenant un film fonctionnel sous la forme d'un film de polymère de cristaux liquides dispersés 12 monté à l'intérieur de la structure feuilletée. La ***figure 1*** ne montre pas les courbures des feuilles par souci de clarté. Dans la pratique les toits, vitrés ou non, présentent des courbures lesquelles sont ordinairement plus accentuées sur les bords à l'endroit de la fixation à la carrosserie pour un accostage choisi pour son «design», l'aérodynamique et l'aspect «flush» correspondant à une bonne continuité de surface entre les éléments contigus.

Le film fonctionnel est un film de type LC constitué d'un polymère contenant les cristaux liquides sensibles à l'application de la tension électrique. Le film est du type PDLC (polymer dispersed liquid cristal). Cette structure feuilleté comporte en outre un capteur sensible à l'application de la tension électrique de manière à activer le film PDLC (non montré), un tel capteur pouvant être placé entre le PDLC et la seconde feuille de verre

Le film de polymère de cristaux liquides dispersés (PDLC) 12 est représenté comme étant positionné à proximité des bords des feuilles de verre 11 et 16 du vitrage 10, mais il pourrait être positionnée n'importe où à l'intérieur du vitrage, par exemple au centre. Cependant, afin de protéger le film PDLC à l'intérieur du vitrage feuilleté, il est préférable que les bords du film n'atteignent pas les bords des feuilles de verre 11 et 16.

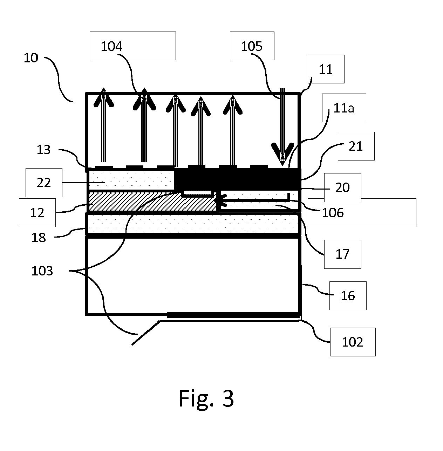

Le film PDLC est « encadré » par un cadre de PVB 17 (correspondant au second intercalaire thermoplastique décrit ci-dessus) et est laminé entre deux intercalaires thermoplastiques 17 et 18 (correspondant respectivement au premier et troisième intercalaires thermoplastiques), cet ensemble est lui-même laminé entre une feuille de verre externe 11 et une feuille de verre externe 16. L'intercalaire thermoplastique 18 est ajouté de manière à assurer une adhérence suffisante entre le film PDLC 12 et la feuille de verre vitre extérieure 16. Il est connu d'utiliser une conception "cadre" encadrant le film fonctionnel, lui-même laminé entre deux intercalaires thermoplastiques, pour stratifier un film fonctionnel au sein d'un vitrage. Selon un mode de réalisation particulier de l'invention et tel qu'illustré par les ***figures 1*** et ***3******,*** les intercalaires thermoplastiques 17 et 18 sont en PVB mais bien entendu ils peuvent être dans un tout autre matériau apte à permettre la lamination du film fonctionnel entre deux feuilles de verre. Les intercalaires thermoplastiques 17 et 18 sont coextensifs avec les feuilles de verre 11 et 16. Le film PDLC présente une épaisseur de 0,38mm.

Autour de la périphérie du toit vitré pour automobile 10, est disposée en faces 2 et 4 une bande d'occultation 101 et 102 plus précisément une couche d'émail qui a pour rôle d'une part de masquer et protéger le matériau d'étanchéité (non représenté) qui est utilisé pour fixer la vitre dans un véhicule (non représenté), et d'autre part de masquer les connexions électriques (busbars, etc) qui fournissent de l'énergie électrique au film de polymère de cristaux liquides dispersés 12. La couche réfléchissant les infrarouges 13 de type couche métallique d'argent, permet de réfléchir les rayonnements infrarouges 104 provenant du film PDLC. Selon un mode de réalisation particulier de l'invention, le moyen pour réfléchir les rayonnements infrarouges 13 peut être constitué de multiples couches alternées d'argent et d'oxyde d'indium. Alternativement, le film réfléchissant les infrarouges 13 peut être un film non-métallique, composé de plusieurs couches.Cependant, dû à la présence de la couche d'émail 101 à la périphérie de la feuille de verre en face 2, les rayonnements infrarouges provenant de l'extérieur du vitrage, par exemple provenant du processus de lamination ou encore du rayonnement solaire, sont absorbés par la feuille de verre externe 11. La chaleur est alors conduite 106 à travers la feuille de verre externe 12, le premier intercalaire thermoplastique 16, le cadre intercalaire thermoplastique 17 et enfin pour être captée par le film PDLC, conduisant alors à sa détérioration. La température du PDLC peut alors atteindre une température supérieure à 100°C, température élevée qui à terme endommage le film PDLC. Si le vitrage feuilleté est soumis à une exposition prolongée à la chaleur, la zone située au bord du film fonctionnel (PDLC, SPD ...) peut être endommagée et conduire à une altération de la fonction de commutation par exemple. En outre, d'autres intercalaires thermoplastiques peuvent être placés entre le film PDLC et la seconde feuille de verre 16 de manière à assurer l'assemblage du feuilleté.

Les feuilles de verres 11 et 16 telles qu'illustrées dans les ***figures 1*** et ***3*** sont des verres de type silico sodocalcique. L'une ou les deux feuilles de verre peuvent être des feuilles de verre clair de type silico-sodo-calcique de composition suivante (en poids): SiO2 68-75%; Al2O3 à 0 - 5%; Na2O 10 - 18%; K2O à 0 - 5%; MgO 0 - 10%; CaO 5 à 15%; SO3 O - 2%. Le verre peut également contenir d'autres additifs, comme par exemple, des adjuvants d'affinage, en quantité allant jusqu'à 2%.

Selon une mise en oeuvre particulière de l'invention, l'une ou les deux feuilles de verre 11, 16 peuvent être des feuilles de verre coloré fortement absorbant, de telle sorte que la transmission lumineuse soit limitée par le seul effet de ces deux feuilles par exemple à moins de 50%, et dans une configuration de ce type de préférence à moins de 30%.

Des verres utilisés pour ces feuilles sont par exemple les verres gris tels que décrits dans le brevet FR2738238 ou dans le brevet EP1680371, ou des verres gris à nuance verte tel que décrits dans EP 887320, ou à nuance bleu comme dans EP1140718.

Les feuilles de verre 11 et 16 sont, dans un exemple, respectivement de 1,6mm et 2,6mm d'épaisseur.Selon un mode de réalisation particulier de l'invention, la feuille de verre interne du vitrage feuilleté peut être en verre teinté dans la masse, dont la composition peut comprendre un ou plusieurs des colorants suivants: oxyde de fer, l'oxyde de cobalt, le sélénium, l'oxyde de chrome, l'oxyde de titane, l'oxyde de manganèse, l'oxyde de cuivre, l'oxyde de vanadium, l'oxyde de nickel. Il est entendu que les deux feuilles de verre peuvent être en verre clair. Une ou les feuilles de verre peuvent être en verre trempé. Les feuilles de verre peuvent être plates ou incurvées. Chaque feuille de verre peut avoir une épaisseur comprise entre 0,5 et 25 mm d'épaisseur, de préférence entre 1 et 5 mm. L'épaisseur totale du vitrage automobile peut donc être comprise entre 1,5 et 100 mm, de préférence entre 2 et 50 mm, et de préférence encore entre 2,5 et 20 mm. De préférence, le vitrage a une transmission de la lumière visible (mesuré avec l'illuminant CIE A) supérieur à 70% et encore de préférence supérieur à 75% lorsque les deux feuilles de verre et les couches de film intercalaires thermoplastiques sont sensiblement clair. Si le vitrage présente globalement une teinte (parce que soit la feuille de verre interne du vitrage est corps- teinté ou un ou plusieurs plis de la matière de couche intermédiaire est teinté), il a de préférence une transmission de lumière visible (mesuré par la CIE Illuminant A) de moins de 40%, de préférence encore inférieure à 30% et de préférence inférieure à 25%, et une transmission énergétique totale (Parry Moon, Air Mass 1.5) de moins de 30%, de préférence encore inférieure à 25% et de préférence inférieure à 20%.

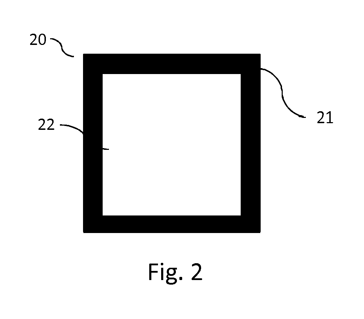

La ***figure 2*** montre le au moins premier film thermoplastique selon un mode de réalisation particulier de l'invention. L'intercalaire thermoplastique 20 comprenant une zone opaque 21 se trouve à la périphérie de l'intercalaire thermoplastique 20. Le film intercalaire 20 est de dimension légèrement plus élevée que celle des feuilles de verres 11 et 16 de manière à ce qu'il s'étende sur toute la surface des feuilles de verre. La zone opaque 21 selon ce mode de réalisation particulier prend la forme d'un cadre réalisé à partir d'un intercalaire thermoplastique coloré dont la transmission lumineuse est de 0%. En particulier, le cadre est réalisé à partir d'un PVB noir entourant la zone non opaque 22 qui elle est constituée d'un PVB transparent faisant écran aux UV ne laissant passer qu'une très faible proportion de ceux-ci. Pour les films PVB de 0,38mm d'épaisseur plus de 95% des UV sont supprimés. Cette proportion peut dépasser 99%. Des polymères à base d'éthylène vinyl-acétate (EVA) sont aussi proposés qui renferment des composants leur conférant une très faible transmission des UV. Il est entendu que tout intercalaire thermoplastique présentant ces caractéristiques, à savoir une transmission inférieure à 5% et de préférence égale à 0% peut être utilisé pour former cette zone opaque. Les dimensions de la zone opaque sont de manière générale équivalentes à celles usuellement utilisées pour la bande d'occultation. Ces dimensions vont dépendre notamment de la zone à masquer. Ainsi, le au moins premier intercalaire thermoplastique tel que représenté par la figure 2 est formé d'un cadre de PVB coloré dans la masse disposé sur le pourtour/périphérie d'un PVB transparent de manière à former l'intercalaire thermoplastique selon l'invention. Il est entendu que ce cadre peut être formé par différentes bandes disposées de manière à former ledit cadre, ces bandes fusionnant lors de l'étuvage de manière à former une pièce unique. Cependant, il peut être composé et appliqué à l'aide de tout autre moyen connu. L'intercalaire est ensuite prévu sur au moins la face 2- 11a- de la feuille de verre externe. Il peut bien entendu être aussi prévu sur la face 4. La ***figure 3*** montre un vitrage selon l'invention sous la forme d'un toit vitré pour automobile 10, comprenant un film fonctionnel sous la forme d'un film de polymère de cristaux liquides dispersés 12 monté à l'intérieur de la structure feuilletée. La description du vitrage représenté par la ***figure 1*** s'applique de façon générale à celui représenté par la ***figure 3******,*** hormis le fait qu'à la ***figure 3******,*** un intercalaire thermoplastique comprenant une zone opaque aux rayonnement des longueurs d'ondes du visible est prévu sur la face 2-11a- de la feuille de verre 11 (c'est à dire sur la surface interne de la vitre extérieure 11) entre le moyen pour réfléchir les rayonnements infrarouges et le film PDLC.

Le film de polymère de cristaux liquides dispersés (PDLC) 12 est représenté comme étant positionné à proximité des bords des feuilles de verre 11 et 16 du vitrage 10, Le film PDLC ne couvre pas la totalité du vitrage afin que les bords du film LC n'entrent pas entrer contact avec l'atmosphère extérieure, en particulier pour protéger les cristaux de l'humidité. Pour prévenir tout contact avec l'atmosphère, le film PDLC 12 est entièrement enveloppé dans les différents intercalaires thermoplastiques. Le film PDLC est enveloppé à sa périphérie par un film PVB 17d'épaisseur voisine de celle du film PDLC qui présente une découpe appropriée dans laquelle vient se loger le film PDLC (correspondant au second intercalaire thermoplastique décrit ci-dessus) et est laminé entre un premier intercalaire thermoplastique 20 et un troisième intercalaire thermoplastique 18. En outre, d'autres intercalaires thermoplastiques peuvent être placés entre le film PDLC et la seconde feuille de verre 16 de manière à assurer l'assemblage du feuilleté. Dans un exemple de réalisation, les intercalaires sont des PVB de 0,38mm d'épaisseur chacune. Le premier intercalaire thermoplastique 20 est positionné entre le moyen pour réfléchir les rayonnements infrarouges 13, lui-même déposé sur la face 2-11a- de la feuille de verre externe 11, et le film PDLC 12. L'intercalaire thermoplastique 20 tel que représenté par la ***figure 2*** comprend une zone opaque 21 aux rayonnement des longueurs d'ondes du visible et une zone non opaque 22. Dans cet exemple, la zone non opaque 22 est formée d'un film PVB transparent faisant écran aux UV de 0.76 mm. La zone opaque aux rayonnements des longueurs d'ondes du visibles 21 est quant à elle formée par un « cadre » de film PVB de couloir noire (PVB teinté dans la masse) qui entoure la zone non opaque. Ainsi l'intercalaire thermoplastique 20 est formé par un cadre de PVB de couleur noire entourant la zone non opaque de PVB classique transparent, de manière à former une feuille intègre de PVB qui s'étend sur toute la surface de la feuille de verre externe 11. Les dimensions de la zone opaque sont de manière générale équivalentes à celles usuellement utilisées pour la bande d'occultation. Ces dimensions vont dépendre notamment de la zone à masquer.

Contrairement à la ***figure 1******,*** la face 2 -11a- de la feuille de verre externe est dépourvue d'une couche d'émail.

Comme indiqué ci-dessus, les composants des films PDLC peuvent être sensibles au vieillissement. Pour leur conférer la longévité souhaitée le film est normalement protégé par un moyen réfléchissant les infrarouges provenant notamment des du rayonnement solaire. Un tel moyen est disposé entre la feuille de verre 11 et le film PDLC 12. Dans ce mode de réalisation, le moyen réfléchissant les rayonnements infrarouges joue bien son rôle en réfléchissant en dehors du vitrage les infrarouges (104) protégeant ainsi le PDLC. de l'échauffement interne

Les rayonnements infrarouges provenant de l'extérieur du vitrage, par exemple provenant du processus de lamination ou encore du rayonnement solaire, sont alors très peu ou pas absorbés 105 par la zone opaque 21 du premier intercalaire thermoplastique 20 évitant ainsi que le film PDLC ne soit soumis à des températures élevées. La chaleur conduite 106 par la feuille de verre puis la zone opaque 21 de l'intercalaire thermoplastique 20 puis enfin le film thermoplastique 17 pour être capté par le film PDLC est fortement diminuée par rapport au vitrage de l'art antérieur tel que montré à la ***figure 1******.***

En outre, comme montré dans la ***figure 3******,*** une couche d'émail peut être présente sur la face 4 du vitrage de manière à masquer les connectiques tels que les busbars et les connecteurs qui fournissent de l'énergie électrique au film de polymère de cristaux liquides dispersés 11 ou encore la colle permettant de coller ces éléments...

Le moyen pour réfléchir les rayonnements infrarouges 13 est identique à celui représenté dans à la ***figure 2*** à savoir une couche métallique d'argent. Selon un mode de réalisation particulier de l'invention, le film réfléchissant les infrarouges 13 peut être constitué de multiples couches alternées d'argent et d'oxyde d'indium. Alternativement, le film réfléchissant les infrarouges 13 peut être un film non-métallique, composé de plusieurs couches.

Les valeurs opto-énergétiques, vu de l'extérieur du véhicule, dans la zone opaque (black PVB) du vitrage feuilleté selon l'invention ont été mesurées. Ainsi, la réflexion énergétique (RE) mesurée était de 48,8%, la réflexion dans les Infra-rouges (RIR) était de 89% et la transmission lumineuse (TL) de 0%.

Ces propriétés permettent de garantir une bonne esthétique de l'extérieur du véhicule (cache connectiques, ...) et dans le même temps éviter une surchauffe du toit due au rayonnements solaires dans cette zone.

A titre d'exemple un vitrage selon l'invention présente la structure suivante de l'extérieur à l'intérieur
- feuille de verre clair (voire extra-clair) de 2,1 mm d'épaisseur
- une couche d'argent en tant que moyen réfléchissant les infrarouges
- feuille de PVB faisant écran aux UV clair de 0,76mm entouré d'un cadre de PVB de coloration noire opaque aux longueurs d'ondes du visible
- feuille de PVB gris de 0,38mm
- film PDLC (avec le moyen permettant de l'alimenter électriquement)
- au minimum deux intercalaires thermoplastiques renfermant notamment le moyen d'activation du film PDLC
- feuille de verre clair de 3,15mm, revêtue d'un système de couches low-e composé comme indiqué ci-dessus d'une couche de silice recouverte d'une couche d'oxyde d'étain dopé.
- Une bande d'occultation d'émail.

Le film PDLC est alimenté en courant AC de 50Hz, et sous une différence de potentiel qui s'élève à 110v.

Un vitrage feuilleté selon l'invention peut être monté dans n'importe quelle vitre d'un véhicule.

Il peut être particulièrement et préférentiellement utilisé comme un toit vitré d'automobile.

De plus, un vitrage feuilleté selon l'invention peut être pourvu d'une fonctionnalité supplémentaire, par l'inclusion d'éléments appropriés, tel qu'un revêtement hydrophile ou hydrophobe sur les faces 1 ou 4. Par exemple, les vitrages feuilletés, tels qu'utilisés comme pare-brise ou lunette arrière de véhicule automobile comportent de nombreuses fonctionnalités telles que: couche réfléchissant le rayonnement solaire, permettant ainsi d'abaisser la température du tableau de bord et la température ambiante dans l'habitacle, le support de rétroviseur intérieur, des bus-bars permettant d'amener un courant électrique, un réseau de fils chauffants, une bande supérieure filtrant le rayonnement solaire, à coloration éventuellement dégradée, un détecteur de pluie ...

## Revendications

1. Vitrage feuilleté (10) comprenant :
a. une première feuille de verre (11),
b. un film fonctionnel alimenté électriquement (12),
c. un moyen pour réfléchir les rayonnements infrarouges (13) disposé entre la première feuille de verre (11) et le film fonctionnel (12),
d. au moins un premier intercalaire thermoplastique (20) disposé entre le moyen pour réfléchir les rayonnements infrarouges (13) et le film fonctionnel (12),
e. une seconde feuille de verre (16),
**caractérisé en ce que** le au moins intercalaire (20) comprend une zone opaque (21) aux rayonnements des longueurs d'ondes du visible.

2. Vitrage feuilleté (10) selon la revendication 1, **caractérisé en ce que** la zone opaque s'étend sur la périphérie d'au moins une des première et seconde feuilles de verre.

3. Vitrage feuilleté (10) selon l'une quelconque des revendications 1 et 2, **caractérisé en ce que** la zone opaque s'étend sur la périphérie de la face interne (11a) de la première feuille de verre (11).

4. Vitrage feuilleté (10) selon l'une quelconque des revendications précédentes, **caractérisé en ce que** la réflexion énergétique est inférieure à 60%, de manière préférée inférieure à 50%, et la réflexion dans les infra-rouges est supérieure à 70%, de manière préférée supérieure à 80%, et de manière encore plus préférée supérieure à 85% et la transmission lumineuse inférieure à 5% et de manière préférée de 0%, ces valeurs étant mesurées dans la zone opaque.

5. Vitrage feuilleté (10) selon l'une quelconque des revendications précédentes, **caractérisé en ce que** le film fonctionnel (12) est altérable à une température élevée supérieure à 60°C.

6. Vitrage feuilleté (10) selon l'une quelconque des revendications précédentes, **caractérisé en ce que** le au moins un premier intercalaire thermoplastique (20) est disposé substantiellement sur la surface du vitrage.

7. Vitrage feuilleté (10) selon l'une quelconque des revendications précédentes, **caractérisé en ce que** le au moins un premier intercalaire (20) est formé par une zone opaque (21) dont la transmission lumineuse est inférieure à 5% et de préférence de 0% de la lumière incidente.

8. Vitrage feuilleté (10) selon l'une quelconque des revendications précédentes, **caractérisé en ce que** le au moins un premier intercalaire (20) est formé à partir d'un cadre opaque (21) disposé autour d'une zone non opaque (22).

9. Vitrage feuilleté (10) selon l'une quelconque des revendications précédentes, **caractérisé en ce que** le au moins un premier intercalaire thermoplastique (20) est une feuille de poly vinyl butyral ou d'éthylène-acétate de vinyl.

10. Vitrage feuilleté (10) selon l'une quelconque des revendications précédentes, **caractérisé en ce que** la zone opaque (21) est obtenue par une coloration en masse de la périphérie de l'intercalaire.

11. Vitrage feuilleté (10) selon l'une quelconque des revendications précédentes, **caractérisé en ce que** le film fonctionnel (12) est un film à cristaux liquides ou un film à particules dispersées en suspension.

12. Vitrage feuilleté (10) selon l'une quelconque des revendications précédentes, **caractérisé en ce que** le moyen pour réfléchir les rayonnements infrarouges (13) est constitué d'un ensemble de couches minces à base d'argent.

13. Vitrage feuilleté (10) selon l'une quelconque des revendications précédentes, **caractérisé en ce que** le vitrage est un toit vitré pour automobile.

14. Utilisation d'un film intercalaire comprenant une zone opaque (21) aux rayonnement des longueurs d'ondes du visible pour protéger de la chaleur un film fonctionnel altérable à des températures élevées, ledit film étant compris entre au moins deux feuille de verre (11, 16).

15. Utilisation d'un vitrage(10) selon l'une quelconque des revendications précédentes en tant que vitrage pour automobile.

16. Utilisation selon la revendication 15, **caractérisé en ce que** la première feuille de verre (11) est la feuille dirigée vers l'extérieur du véhicule et la seconde feuille de verre (16) est la feuille de verre dirigée vers l'intérieur du véhicule, l'intercalaire thermoplastique (20) comprenant une zone opaque s'étendant sur toute la périphérie de ladite feuille intercalaire étant alors placée du côté de la face interne de la feuille de verre (11) dirigée vers l'extérieur et le film fonctionnel étant alors disposé entre le au moins un premier intercalaire et la seconde feuille de verre (16).
